# EUROPEAN PATENT SPECIFICATION

(11) **EP 2 735 142 B1**
(45) Date of publication and mention of the grant of the patent: **05.09.2018**
(21) Application number: 11776986.9
(22) Date of filing: 18.10.2011
(51) Int. Cl.: H04N 7/18, G06Q 30/06, H04N 5/232

(54) **ARTICLE UTILIZATION**
VERWENDUNG EINES ARTIKELS
UTILISATION D'UN ARTICLE

(30) Priority: 20.10.2010 US 394933 P
(43) Date of publication of application: 28.05.2014
(73) Proprietor: The Procter & Gamble Company, Cincinnati, OH 45202 (US)
(72) Inventor: STRIEMER, Grant, Edward, Cincinnati Ohio 45013 (US); DUVAL, Dean, Larry, Lebanon Ohio 45036 (US); SHERMAN, Faiz, Feisal, Mason Ohio 45040 (US)
(74) Representative: Zetterer, Gerd
(86) International application number: PCT/US2011/056684
(87) International publication number: WO 2012/054463

(56) References cited:
- US-A1- 2007 287 893
- US-A1- 2007 287 893
- US-A1- 2008 094 417
- US-A1- 2009 102 859
- US-A1- 2009 237 546
- US-A1- 2009 300 100
- US-A1- 2009 303 342
- US-A1- 2010 141 784

## Description

### CROSS REFERENCE TO RELATED APPLICATIONS

This application claims the benefit of U.S. Provisional Application No. 61/394,933, filed October 20, 2010.

### TECHNICAL FIELD

The present application is generally directed to article utilization and, more particularly, to utilizing an article with assistance from a video image.

### BACKGROUND

While users are becoming more sophisticated regarding the purchase of products through online vendors and the like, oftentimes users are naive regarding the products that best facilitate operation and/or treatment of an article in user's vicinity. As an example, a user may have a home appliance, but not know the products that may be purchased to ensure proper operation of the home appliance. Similarly, when there is an issue with an article, the user may not know what products may be purchased to properly address that issue. While the user can utilize a mobile computing device (or other computing device) to perform an online search for information and/or products regarding the operation of the article, it can become a cumbersome process to locate the appropriate information. Further, if an issue occurs with an article that requires treatment, the user may be again forced to perform an online search to attempt to locate products that provide a solution to the issue. As this can also become a cumbersome process, users oftentimes never resolve the issue.

US-A1-2009 237546 discloses a portable electronic device capturing an image of an object. Image recognition is performed on the image to identify the object, a task associated with the identified object is identified, and information about the task is displayed on the display screen of the portable electronic device along with the image. As identification of appropriate tasks is

US-A1-2008 094417 describes several possibilities of interacting with a mixed reality. A mobile device captures an image of a real-world object where the image has content information that can be used to control a mixed reality object through an offered command set.

US-A1 2009 303342 describes a method of tracking faces in an image stream with a digital image acquisition device. The method includes receiving images from an image stream including faces, calculating corresponding integral images, and applying different subsets of face detection rectangles to the integral images to provide sets of candidate regions. The implemented face detection is spread across multiple frames recorded.

US-A1 2010 141784 discloses a terminal for face detection performing a special image capturing according to the movement of the user's face. The terminal includes a camera configured to receive an image of a subject, a display unit configured to output the received image of the subject and to overlay a pre-determined background image on the received image, and a controller configured to detect a face from the received image of the subject and display the background image based on the size and position of the detected face.

### SUMMARY

The claimed invention is defined by the appended independent claims. Further advantages embodiments of the present invention are set forth by the features of the further dependent claims.

Included are embodiments for article utilization. One embodiment of a system includes a first image capture device that captures a first real-time video image of an article and a memory component that stores a computer application. The computer application may be configured to cause the system to identify the article from the first real-time video image, identify an action to be performed on the article, and provide data for performing the action via an altered version of the first real-time video image. The system may also include a display device for displaying the altered version of the first real-time video image.

Similarly, one embodiment of a mobile computing device for article utilization includes an image capture device that captures a first real-time video image of an article and a memory component that stores a computer application. The computer application may be configured to identify the article from the first real-time video image, identify an action to be performed on the article, and alter the first real-time video image to create an altered first real-time video image. Also included is a display device for displaying the altered first real-time video image.

Also included are embodiments of a non-transitory computer-readable medium for article utilization. At least one embodiment of a non-transitory computer-readable medium stores a computer application that, when executed by a computer, causes the computer to identify an article from a first real-time video image, identify an action to be performed on the article, and alter the first real-time video image to create an altered image. In some embodiments, the computer program provides the altered image for display, where providing the altered image includes providing data for performing the action.

### BRIEF DESCRIPTION OF THE DRAWINGS

The following detailed description of specific embodiments of the present disclosure can be best understood when read in conjunction with the drawings enclosed herewith.
FIG. 1 depicts a computing environment, illustrating a system for article utilization, according to embodiments shown and described herein;
FIG. 2 depicts a mobile computing device, which may be utilized in the computing environment of FIG. 1 for article utilization, according to embodiments shown and described herein;
FIG. 3 depicts an interface for accessing a computer application for article utilization, according to embodiments shown and described herein;
FIG. 4 depicts an interface for providing a plurality of user options related to the article utilization application, according to embodiments shown and described herein;
FIG. 5 depicts an interface for providing a real-time video image of a kitchen, according to embodiments shown and described herein;
FIG. 6 depicts an interface of an altered real-time video image, further illustrating an close-up view of the refrigerator from FIG. 5, according to embodiments shown and described herein;
FIG. 7 depicts an interface of a real-time video image, illustrating a clothes closet, according to embodiments shown and described herein;
FIG. 8 depicts a plurality of interfaces that include an altered real-time video image of a clothes closet and a user, according to embodiments shown and described herein;
FIG. 9 depicts an interface of an altered real-time video image a user wearing clothes from the interface of FIG. 8, according to embodiments shown and described herein;
FIG. 10 depicts an interface of a real-time video image, showing a bathroom, according to embodiments shown and described herein;
FIG. 11 depicts an interface of a real-time video image of a sink from the bathroom from FIG. 10, according to embodiments shown and described herein;
FIG. 12 depicts a flowchart for providing data for utilizing an article, according to embodiments shown and described herein; and
FIG. 13 depicts a flowchart for use and treatment of an article, according to embodiments shown and described herein.

The embodiments set forth in the drawings are illustrative in nature and not intended to be limiting of the disclosure defined by the claims. Moreover, individual features of the drawings and disclosure will be more fully apparent and understood in view of the detailed description.

### DETAILED DESCRIPTION

The following text sets forth a broad description of numerous different embodiments of the present disclosure. The description is to be construed as exemplary only and does not describe every possible embodiment since describing every possible embodiment would be impractical, if not impossible. It will be understood that any feature, characteristic, component, composition, ingredient, product, step or methodology described herein can be deleted, combined with or substituted for, in whole or part, any other feature, characteristic, component, composition, ingredient, product, step or methodology described herein. Numerous alternative embodiments could be implemented, using either current technology or technology developed after the filing date of this patent, which would still fall within the scope of the claims. All publications and patents cited herein are incorporated herein by reference.

More specifically, embodiments disclosed herein may be configured as a system, mobile computing device, method, and/or non-transitory computer-readable medium for identifying an article from a real-time video image, as well as providing an altered version of the real-time video image. In some embodiments, the user may direct an image capture device, such as a camera at one or more articles. The articles can include inanimate objects (such as appliances, surfaces, computers, furniture, fixtures, consumer goods, and the like), a human body part (such as skin, teeth, hair, nails, feet, and the like), and/or a pet body part (such as coat, teeth, nails, and the like). The image capture device may be coupled to a mobile computing device and may be configured to capture a real-time video image of the article. The mobile computing device can receive the real-time video image from the image capture device and may identify the article from the image. The mobile computing device alters the real-time video image to highlight the identified article. Additionally, the mobile computing device can further provide utilization information (such as use and/or treatment information) regarding the article. The mobile computing device may also provide products to use in combination with the article and/or products to treat the article.

Examples of such products may include household care products, beauty and grooming products, and health and well-being products. Some examples of household products include Pampers™ paper towels, Tide™ detergent, Dawn™ soap, Duracell™ batteries, Mr. Clean™ cleaning products, *etc.* Similarly, some examples of beauty and grooming products include Olay™ beauty products, Head and Shoulders™ shampoo, and Covergirl™ beauty products. Some examples of health and well-being products include Pringles™ potato chips, Vicks™ cough syrup, Tampax™ tampons, and Crest™ toothpaste. Other products and/or services are also included within the scope of this application.

As an example, in some embodiments, the user may direct the image capture device at a kitchen. The image capture device can capture a real-time video image of the kitchen and send the real-time video image to the mobile computing device. The mobile computing device can receive the real-time video image and may identify a refrigerator in the kitchen. The mobile computing device alters the real-time video image to highlight the identified refrigerator. The mobile computing device may determine usage information for the refrigerator, such as information
regarding changing of filters on the refrigerator, products to use in conjunction with the refrigerator (*e.g.,* cleaning products), *etc.* Other information may also be provided, such as treatment information. Treatment information may include information regarding treating an issue with the refrigerator, such as cleaning of the refrigerator, addressing a malfunction, *etc.* The usage and treatment information may be provided as a further alteration to the real-time video image. Further, the mobile computing device may recommend products used in conjunction with the article and/or for treatment of that article.

As another example, in some embodiments, the user may direct the image capture device at the user's skin (or other human and/or pet body part). As in the previous example, the image capture device can send a real-time video image to the mobile computing device, which can then identify the skin as an article. The mobile computing device further alters the video image to highlight the skin. Additionally, the mobile computing device can provide treatment information regarding any detected skin conditions (dry skin, oily skin, dirty skin, rashes, scrapes, skin color, wrinkles, tattoos, *etc.).* The treatment information may include text instructions, video instructions, product recommendations, product purchasing options, *etc.* Additionally, in some embodiments an improvement promise may be provided to the user if the user follows treatment information. The mobile computing device may further alter the real-time video image to provide the treatment information.

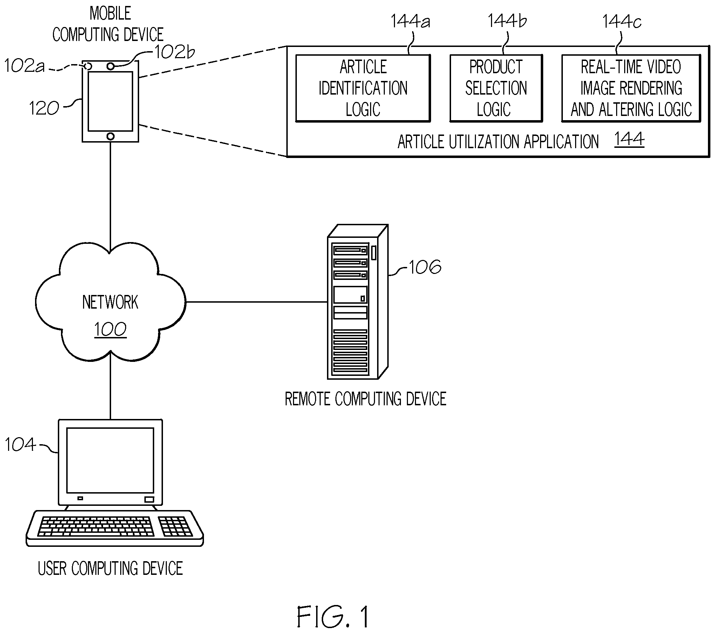

Referring now to the drawings, FIG. 1 depicts a computing environment, illustrating a system for article utilization, according to embodiments shown and described herein. As illustrated in FIG. 1, a network 100 may include a wide area network, such as the Internet, a local area network (LAN), a mobile communications network, a public service telephone network (PSTN) and/or other network and may be configured to electronically couple a mobile computing device 102, a user computing device 104, and a remote computing device 106.

More specifically, the mobile computing device 102 may include a mobile telephone, personal digital assistant, laptop computer, tablet, and/or other mobile device. Additionally, the mobile computing device 102 may include and/or be coupled to a first image capture device 102a and a second image capture device 102b. The first image capture device 102a may be positioned on a back side of the mobile computing device 102 (as indicated by the dashed circle) and may be configured to capture real-time video images, still images, and/or other images. Similarly, the second image capture device 102b may be positioned opposite the first image capture device 102a and may also be configured to capture still images, real-time video images, and/or other images.
Further, it should be understood that, while the example of FIG. 1 illustrates the image capture devices 102a, 102b as being physically part of the mobile computing device 102, some embodiments may be configured such that the first image capture device 102a and/or the second image capture device 102b reside external to the mobile computing device 102. In such embodiments, the image capture devices 102a, 102b may communicate image data to the mobile computing device 102 via a wired and/or wireless protocol. Similarly, while the mobile computing device 102 of FIG. 1 may be illustrated with an attached display, this is also merely an example. In some embodiments, the display may reside external to the mobile computing device and may communicate with the mobile computing device 102 via a wired or wireless protocol.

Also included in the mobile computing device 102 is an article utilization application 144, which includes article identification and tracking logic 144a, product selection logic 144b, and real time image rendering and altering logic 144c. As described in more detail below, the article identification and tracking logic 144a may be configured to receive image data (such as real-time video images) and identify, from the received image data, at least one article. Additionally, the article identification and tracking logic 144a may be configured to track the location of the identified article within the image, regardless of movement of the article or the mobile computing device 102. Similarly, the product selection logic 144b may be configured to cause the mobile computing device 102 to determine and/or recommend a product that may be used in conjunction with and/or to treat the identified article. Similarly, the real-time video rendering and altering logic 144c may be configured to render a real-time video image for display, as well as alter the imagery, as described in more detail below.

Also illustrated in FIG. 1 is the user computing device 104. More specifically, the user computing device 104 may be configured to communicate with the mobile computing device 102 via the network 100. In some embodiments, the mobile computing device 102 may send stored data to the user computing device 104 for backup. Similarly, in some embodiments, a user may make one or more preference selections (such as favorite products, allergies, *etc*.) on the user computing device 104. This data may be sent to the mobile computing device 102 to enhance accuracy of determinations made by the mobile computing device 102.

Similarly, the remote computing device 106 may also be coupled to the network 100 and may be configured to communicate with the mobile computing device 102 (and/or with the user computing device 104) to receive usage data, statistics, purchases, *etc.* for tracking a success metric (such as related to the article, to the real-time video image, and/or to the altered version of the real-time video image), of the user to further enhance performance of the mobile computing device 102.

It should be understood that while the mobile computing device 102, the user computing device 104, and the remote computing device 106 are depicted as PDAs, personal computers and/or servers, these are merely examples. More specifically, in some embodiments any type of computing device (*e.g.* mobile computing device, personal computer, server, *etc*.) may be utilized for any of these components. Additionally, while each of these computing devices is illustrated in FIG. 1 as a single piece of hardware, this is also an example. More specifically, each of the computing devices 102 - 106 may represent a plurality of computers, servers, databases, *etc.*

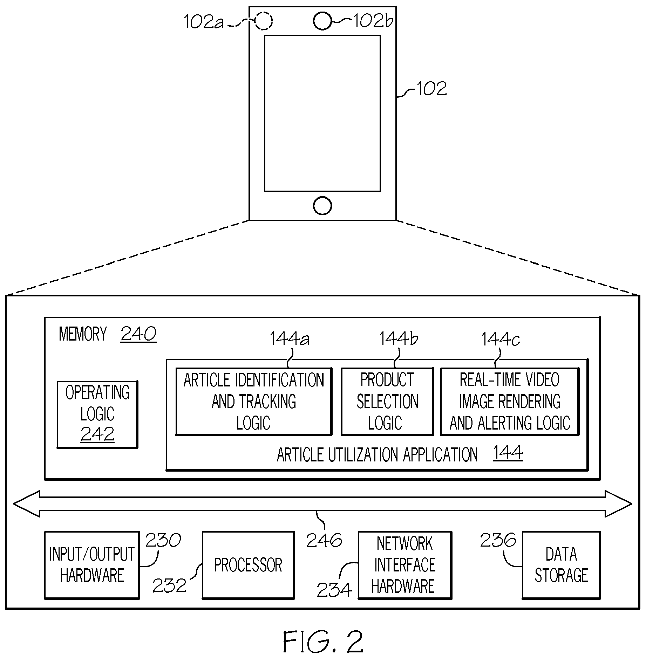

FIG. 2 depicts a mobile computing device, which may be utilized in the computing environment of FIG. 1 for article utilization, according to embodiments shown and described herein. In the illustrated embodiment, the mobile computing device 102 includes a processor 232, input/output hardware 230, network interface hardware 234, a data storage component 236 (which stores the user data, product data, and/or other data), and a memory component 240. The memory component 240 may be configured as volatile and/or nonvolatile memory and, as such, may include random access memory (including SRAM, DRAM, and/or other types of RAM), flash memory, secure digital (SD) memory, registers, compact discs (CD), digital versatile discs (DVD), and/or other types of non-transitory computer-readable mediums. Depending on the particular embodiment, these non-transitory computer-readable mediums may reside within the mobile computing device 102 and/or external to the mobile computing device 102.

Additionally, the memory component 240 may be configured to store operating logic 242 and an article utilization application 144. The article utilization application 144 may include a plurality of different pieces of logic, some of which include the article identification and tracking logic 144a, the product selection logic 144b, and the real-time video image rendering and altering logic 144c, each of which may be embodied as a computer program, firmware, and/or hardware, as an example. A local interface 246 is also included in FIG. 2 and may be implemented as a bus or other interface to facilitate communication among the components of the mobile computing device 102.

The processor 232 may include any processing component operable to receive and execute instructions (such as from the data storage component 236 and/or memory component 240). The input/output hardware 230 may include and/or be configured to interface with a monitor, keyboard, mouse, printer, image capture device, microphone, speaker, gyroscope, compass, positioning system, and/or other device for receiving, sending, and/or presenting data. The network interface hardware 234 may include and/or be configured for communicating with any wired or wireless networking hardware, including an antenna, a modem, LAN port, wireless fidelity (Wi-Fi) card, WiMax card, mobile communications hardware, and/or other hardware for communicating with other networks and/or devices. From this connection, communication may be facilitated between the mobile computing device 102 and other computing devices. Similarly, it should be understood that the data storage component 236 may reside local to and/or remote from the mobile computing device 102 and may be configured to store one or more pieces of data for access by the mobile computing device 102 and/or other components.

Included in the memory component 240 are the operating logic 242 and the article utilization application 144. The operating logic 242 may include an operating system and/or other software for managing components of the mobile computing device 102. Similarly, as discussed above, the article utilization application 144 may reside in the memory component 240 and may be configured to cause the processor 232 identify an article from a received real-time video image, determine a potential product for treating and/or using the article, and alter the real-time video image, based on whether the potential product is in the real-time video image. Other functionality is also included and described in more detail, below.

It should be understood that the components illustrated in FIG. 2 are merely exemplary and are not intended to limit the scope of this disclosure. While the components in FIG. 2 are illustrated as residing within the mobile computing device 102, this is merely an example. In some embodiments, one or more of the components may reside external to the mobile computing device 102. It should also be understood that, while the mobile computing device 102 in FIGS. 1 and 2 is illustrated as a single device, this is also merely an example. In some embodiments, the product identification and tracking functionality, the product selection functionality, and the real-time video image rendering and altering functionality may reside on different devices.

It should also be understood that while the mobile computing device 102 is illustrated with the article identification and tracking logic 144a, the product selection logic 144b, and the real-time video image rendering and altering logic 144c, within the article utilization application 144, this is also an example. More specifically, in some embodiments, a single piece of logic may perform the described functionality. Similarly, in some embodiments, this functionality may be distributed to a plurality of different pieces of logic, which may reside in the mobile computing device 102 and/or elsewhere. Additionally, while only one application is illustrated as being stored by the memory component 240, other applications may also be stored in the memory component and utilized by the mobile computing device 102.

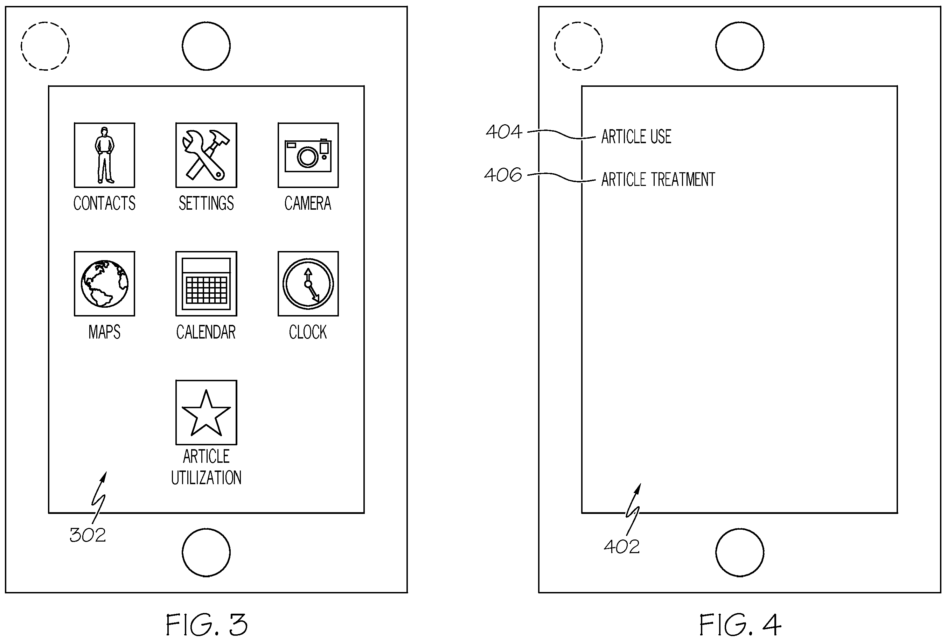

FIG. 3 depicts an interface 302 for accessing the article utilization application 144, according to embodiments shown and described herein. As illustrated, the mobile computing device 102 is configured to provide an interface 302 (*e.g.,* via the operating logic 142). The interface 302 may be configured to provide the user with access to one or more computer applications that are stored on the mobile computing device 102 and/or elsewhere. As illustrated, the mobile computing device 102 may include and provide options to access a contacts application, a settings application, a camera application, a maps application, a calendar application a clock application, and the article utilization application 144. As illustrated, the article utilization application 144 may be accessed by selection of an article utilization option 304. Access to other applications may also be provided.

It should be understood that while the mobile computing device 102 from FIG. 2 illustrates the article utilization application 144 as the only application stored in the memory component 240, this is merely an example. More specifically, as discussed above, the article utilization application 144 may provide additional functionality, such as that provided by the computer applications of FIG. 3.

FIG. 4 depicts an interface 402 for providing a plurality of user options related to the article utilization application, according to embodiments shown and described herein. As illustrated, the interface 402 may provide an "article use" option 404 and an "article treatment" option 406. As described in more detail below, by selecting the article use option 404, the mobile computing device 102 may provide options for using an article, such as using a kitchen appliance, selecting clothing to wear, *etc.* Similarly, by selecting the article treatment option 406, the mobile computing device 102 may provide options for treating an article, such as cleaning a surface, treating a stain, repairing the article, applying makeup, changing hair color, changing skin tone, repairing skin, *etc.*

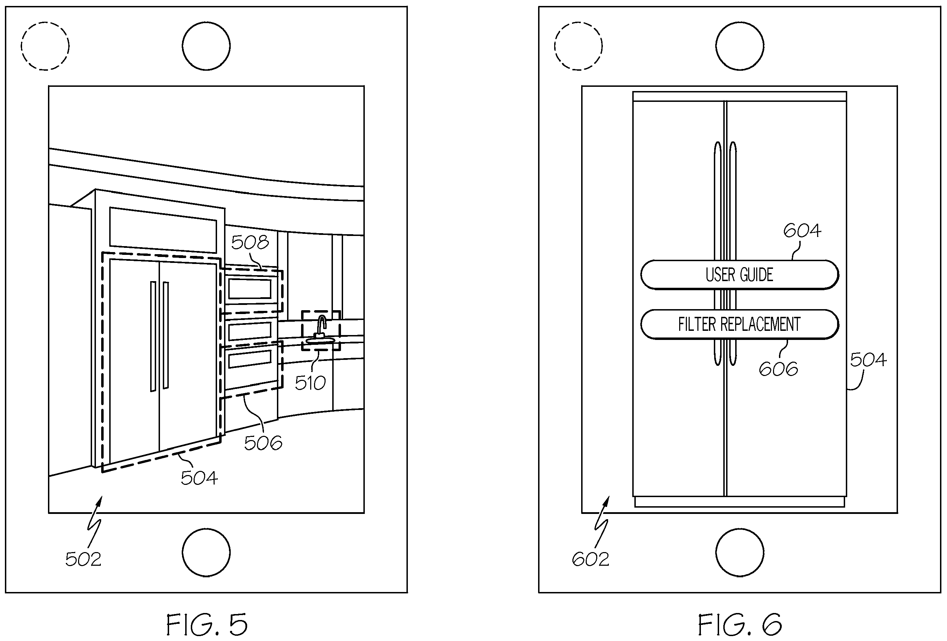

FIG. 5 depicts an interface 502 for providing a real-time video image of a kitchen, according to embodiments shown and described herein. As illustrated, in response to selection of the article use option 404, from FIG. 4, the mobile computing device 102 can begin receiving a real-time video image from the first image capture device 102a. In the embodiment of FIG. 5, the first image capture device 102a is capturing a real-time video image of a kitchen. Additionally, as discussed herein, the mobile computing device 102 can identify, from the real-time video image, one or more articles. The articles in FIG. 5 include a refrigerator 504, an oven 506, a microwave 508, and a kitchen sink 510. The mobile computing device 102 alters the real-time video image by highlighting the identified articles, as illustrated with virtual dashed boxes. Additionally, as the user can change the position of the first image capture device 102a, the position of the articles in the real-time video image may also change. Accordingly, the mobile computing device 102 utilizes a compass and/or gyroscope to track the identified articles despite this movement.

It should be understood that while the embodiment of FIG. 5 illustrates that the real-time video image may be altered by an outline around one or more of the identified articles, this is merely an example. More specifically, any alteration of the real-time video image to highlight the identified articles and/or reduce visibility of non-articles in the real-time video image may be utilized including, graying out non-articles, directing virtual arrows to articles, changing the color of articles, *etc.*

It should also be understood that in some embodiments, the mobile computing device 102 may be configured to automatically determine a product associated with the articles present in the real-time video image without input from the user. As an example, the mobile computing device 102 can recommend dishwashing detergents, oven cleaners, bacterial wipes, odor scrubbers, microwavable dinners, *etc.* and provide options to view additional information regarding these products, as well as provide purchasing options, *etc.*

FIG. 6 depicts an interface 602 of an altered real-time video image, further illustrating a close-up view of the refrigerator 504 from FIG. 5, according to embodiments shown and described herein. As illustrated, in response to the user selecting the refrigerator 504, from FIG. 5, the mobile computing device 102 can provide a close-up version of the selected article via a zoom function, by accessing a stored image of the article, *etc.* Additionally, one or more options may be included to provide usage information for the selected article. More specifically, a user guide option 604 may be provided, as well as a filter replacement option 606. By selecting the user guide option 604, the mobile computing device 102 may access an electronic version of the user guide associated with the selected article. The user guide may be stored locally and/or may be accessed from the remote computing device 106.

Additionally, in some embodiments, as the mobile computing device 102 identifies the refrigerator 504 as an article, the mobile computing device 102 may also identify the make and/or model of the refrigerator 504 to locate the proper user guide. Such identification may be performed
utilizing a marker that is affixed to the article, such as a bar code, radio frequency identifier (RFID), and/or other marker. Similarly, some embodiments of the mobile computing device 102 may be configured to identify an article via a markerless process, by instead analyzing the shape, size, and other characteristics of the article.

Similarly, by selecting the filter replacement option 606, the mobile computing device 102 may provide the user with instructions for replacing the filters on the refrigerator 504. Further, the mobile computing device 102 may determine a vendor that sells filters for this particular refrigerator 504 and provide an option to purchase the filters. Still some embodiments may be configured to recommend a product to use in conjunction with the article. As an example, with FIGS. 5 and 6, the mobile computing device 102 may determine that a particular brand of baking soda may be used to reduce odors in the refrigerator 504 and may recommend this product to the user. Options for online purchasing and/or including in an electronic shopping list may also be provided.

It should be understood that while the embodiments described with regard FIGS. 5 and 6 refer to kitchen appliances, these are merely examples. In some embodiments, a human body part, a pet body part, and/or another inanimate object may be identified as articles. As an example, the user may capture an image of the user's hair via the image capture device 102a and/or 102b. The mobile computing device 102 can identify the hair as an article and provide information related to combing, braiding, and/or otherwise using the hair via an altered version of the image.

Similar use information may be provided for other inanimate objects. As an example, the article may be a "once a month" toilet bowl cleaner. In such an embodiment, once the toilet bowl cleaner is recognized as the article, the mobile computing device 102 can alter the real-time video image to show how to attach the article to the toilet bowl, whereto place the toilet bowl cleaner it in the toilet, and describe how frequently it needs to be changed. The mobile computing device 102 may also be configured to remind the user to change the bowl cleaner once the recommended time period has expired.

Other examples of inanimate objects include a water filter inside a refrigerator and a lint filter within a dryer. Once either filter is identified as the article, mobile computing device 102 can provide the altered version of the real-time video image to show a replacement guide for indicating a process for changing and/or cleaning the filter. Similarly, the mobile computing device may be configured to give a replacement time recommendation for the filter; give a cleaning time recommendation for the filter; and/or remind the user to change the filter once a certain period of time has elapsed. Similarly, the mobile computing device 102 may be configured to suggest to the user to purchase a replacement filter when the period of time has elapsed. Similarly, in some embodiments, the mobile computing device may automatically include the filter in an electronic shopping list a predetermined time before the expected filter life has been reached. In still some embodiments, the mobile computing device 102 can provide an option to reorder the article before a recommended life of the article has expired.

Similarly, in some embodiments, the mobile computing device 102 can determine a manner in which an article is being used and recommend products customized for that use. As an example, if the product is a washing machine, the mobile computing device 102 can determine that the user is utilizing a cold water cycle. This determination can be made from a user input, a communication with the washing machine, and/or via other mechanisms. Regardless, upon determining that a cold water cycle is being utilized, when the first image capture device 102a is directed to the washing machine, recommendations for cold water detergents may be provided to the user. The user may also be provided with options to add the product to the shopping list and/or options for immediate purchase.

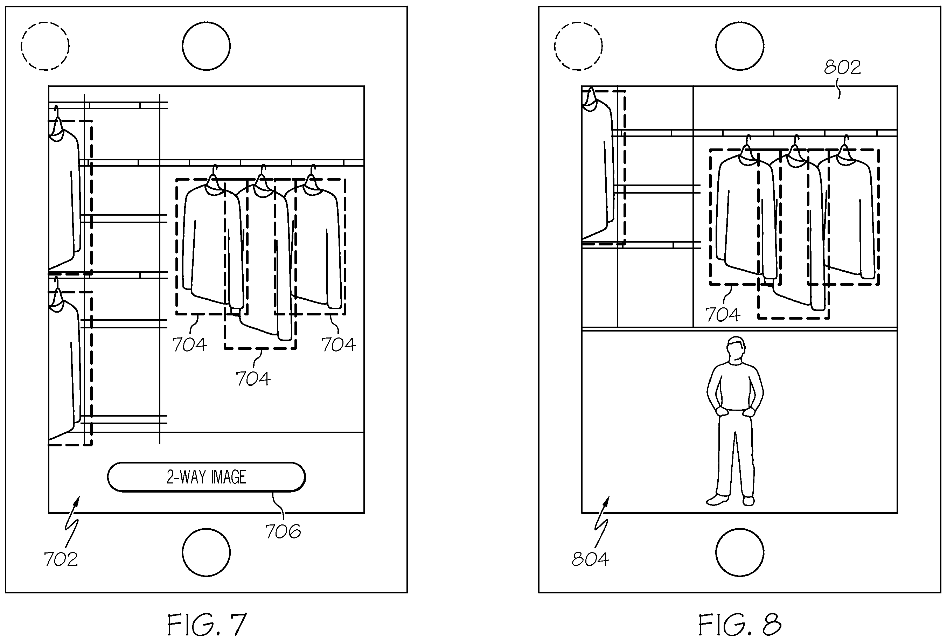

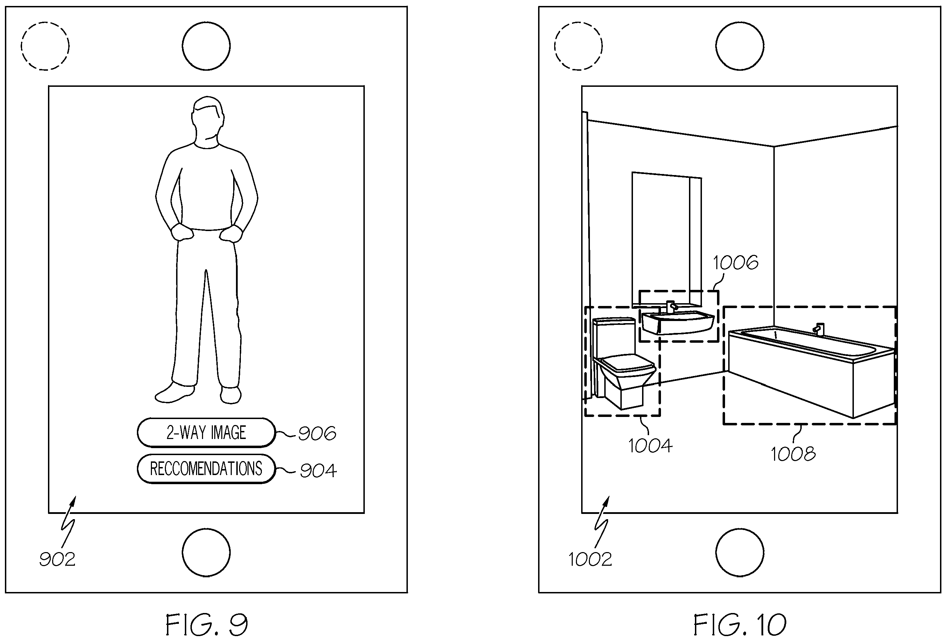

FIG. 7 depicts an interface 702 of a real-time video image, illustrating a clothes closet, according to embodiments shown and described herein. As illustrated, in response to selecting the article use option 404, from FIG. 4, and directing the first image capture device 102a to a clothes closet, the interface 702 may be provided. More specifically, the mobile computing device 102 identifies a plurality of articles (including identifying a color of an article), including a desired article 704 and highlights the articles in the real-time video image. In response to selection of the desired article 704, the mobile computing device 102 can provide an interface, as illustrated in FIG. 9. Also included is a 2-way image option 706. Selection of the 2-way image option 706 can provide an interface, as illustrated in FIG. 8.

FIG. 8 depicts a plurality of interfaces 802, 804 that include an altered real-time video image of a clothes closet and a user, according to embodiments shown and described herein. As illustrated, in response to selection of the 2-way image option 706, the mobile computing device 102 can receive image data from the first image capture device 102a, as well as from the second image capture device 102b and provide the imagery in the first interface 802 and the second interface 804,
image capture device 102b and provide the imagery in the first interface 802 and the second interface 804, respectively. Additionally, in response to selection of the desired article 704, an interface as shown in FIG. 9 may be provided.

FIG. 9 depicts an interface 902 of an altered real-time video image of a user wearing clothes from the interface of FIG. 8, according to embodiments shown and described herein. As illustrated, in response to selection of the desired article 704, from FIGS. 7 and 8, the mobile computing device 102 can provide the interface 902. The interface 902 may include an altered version of the image received from the second image capture device 102b. More specifically, the second image capture device 102b may capture an image of the user (as illustrated in the second interface 804). Additionally, an image of the article 704 may be superimposed onto that image of the user so that the user can determine how the article looks.

It should be understood that in some embodiments, the mobile computing device 102 can identify the article and, from that identification, access stored imagery for the article. The stored imagery may then be altered to fit the image of the user and then superimposed onto the image of the user. Similarly, in some embodiments, the image of the user is a real-time video image. In such embodiments, the mobile computing device 102 can further alter the image of the article to correspond with the motion of the user.

Also included in the interface 902 are a recommendations option 904 and a 2-way image option 906. More specifically, the recommendations option 904 may be configured to provide suggested products for the user to try (and/or purchase). As an example, the mobile computing device 102 can determine environmental conditions (such as season, location, weather, temperature, humidity, elevation, *etc*.), the user's calendar, and/or other information to determine an appropriate product. Further, in some embodiments, the mobile computing device 102 can prompt the user with one or more questions to further customize the product recommendation. The suggested products may then be placed on an electronic shopping list on the mobile computing device 102. Additionally, if the recommended article is not currently owned by the user, the mobile computing device 102 can provide an option to purchase the recommended article. Additionally, selection of the 2-way image option 906 can provide the user with the first interface 802 from FIG. 8.

Similarly, in recommending one or more suggested articles, the mobile computing device determines a current physical condition of the user, a current emotional condition of the user, and/or other data. The physical and/or emotional condition of the user may be determined article utilization application 144 and/or via another computer application. Similarly, in some embodiments, the mobile computing device 102 can determine such conditions via a questionnaire, via body temperature, calendar data, environmental data, *etc.*

It should be understood that while the embodiment described with regard to FIGS. 7 - 9 refers to an article of clothing, this is merely an example. In some embodiments, an article may include other a human body part, a pet body part, and/or an inanimate object. Examples of such articles include appliances, devices, fixtures (such as sinks, toilets, mirrors, lights, drains, tubs, showers, *etc*.), flooring materials (such as carpets, tile, wood, linoleum, concrete, area rugs, *etc*.), countertops and other hard surfaces (such as Formica, granite, porcelain, glass, plastic, *etc*.), clothing (such as shirts, pants, dresses, undergarments, outer garments, shoes, socks, *etc*.). Similarly, articles may also include hair, skin, teeth, fingernails, toenails, buttocks, *etc.*

As an additional example, a user may be provided with a makeover option. In such an embodiment, the mobile computing device 102 may receive a real-time video image of a plurality of make-up products (such as lipsticks, eye shadow, *etc*.), as well as an image of the user's face. Additionally, the mobile computing device 102 may receive information regarding the reason for the makeover (*e.g.,* party, business meeting, sporting event, *etc*.). With this information, the mobile computing device 102 can identify the user's face as the article, determine which of the plurality of products to use, provide information on how to utilize those articles, and provide options for products that would complete the makeover. Similarly, in some embodiments, the user may simply use a single image capture device (indicating that the user's face is the article). In such embodiments, the mobile computing device 102 can then recommend products (*e.g.* lipstick, eye shadow, *etc*.) for completing the makeover.

FIG. 10 depicts an interface 1002 of a real-time video image, showing a bathroom, according to embodiments shown and described herein. As illustrated, the interface 1002 may be provided in response to selection of the article treatment option 406, from FIG. 4 and directing the first image capture device 102a toward a bathroom. More specifically, the mobile computing device 102 can receive a real-time video image from the first image capture device 102a and identify one or more articles in the real-time video image. Additionally, the mobile computing device 102 highlights one or more of the identified articles. In the example of FIG. 10, the identified articles include a porcelain toilet 1004, a porcelain sink 1006, a ceramic bathtub 1008, and a tile floor 1010.

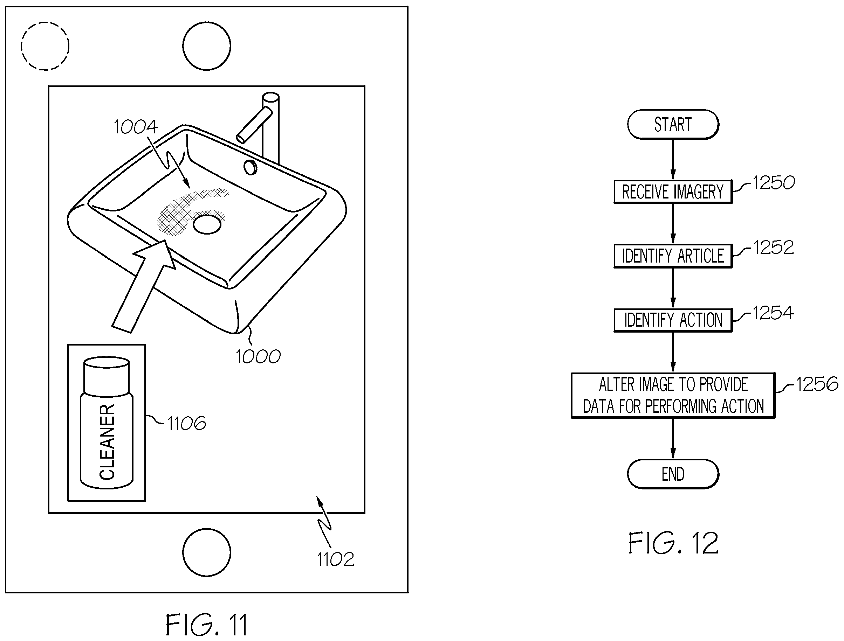

FIG. 11 depicts an interface 1102 of a real-time video image of a sink from the bathroom from FIG. 10, according to embodiments shown and described herein. As illustrated, the sink 1006 is zoomed to illustrate a stain 1104 on the sink. From the image in FIGS. 10 and/or 11, the mobile computing device 102 can identify the article (in this case a sink), the material of the article (in this case porcelain), and the nature of the stain (in this case soap scum). With this information, the mobile computing device 102 can determine a product for treating the article (in this case cleaner 1106) and alter the real-time video image to illustrate a predicted image the skin if the user uses the determined product.

The mobile computing device 102 can additionally alter the real-time video image to provide information regarding a process for removing the stain, instructions on utilization of the cleaner 1106, and/or other data. More specifically, in response to selecting the sink 1006 in FIG. 11, this information may be provided. In such embodiments, the real-time video image may be altered to provide a text overlay of the information utilized to determine the product for treating the article. Similarly, by selecting the cleaner 1106, the mobile computing device 102 can further alter the real-time video image to provide usage instructions, product instructions, purchasing instructions, purchasing options, *etc.* related to the product.

It should be understood that while the mobile computing device 102 may be configured to automatically make product recommendations, in some embodiments, the mobile computing device 102 may prompt the user with questions to further customize the user experience. As an example with FIG. 11, in some embodiments, the mobile computing device 102 can prompt the user regarding whether the user prefers a particular brand of cleaner, a particular type of cleaner (gel, spray, powder, *etc*.), and/or other information to further provide a custom product recommendation. Additionally, in some embodiments, the mobile computing device 102 may be configured to access an electronic shopping cart, and/or determine past selections to make these determinations.

Additionally, in some embodiments, the mobile computing device 102 can determine a malfunction with the article. Referring again to FIG. 11 as an example, if the faucet is dripping, the mobile computing device 102 may be configured to identify the drip. In response to identifying the drip, the mobile computing device 102 alters the real-time video image to highlight the dripping faucet. The mobile computing device 102 can additionally provide instructions and/or products for fixing the dripping faucet. Such information may include text instructions, video instructions, online purchasing options, plumber contact information, *etc.*

It should be understood that while the embodiments described with regard FIGS. 10 and 11 identified bathroom fixtures as articles for treatment, these are merely examples. More specifically, in some embodiments, a human body part, a pet body part, and/or other inanimate objects may be identified as articles. As an example, if the article is the teeth of the user, the user may use the first image capture device 102a and/or the second image capture device 102b to capture an image of the teeth. The mobile computing device 102 can then alter the image to provide options for cleaning, whitening, flossing and/or otherwise treating the teeth. Similarly, other articles that could be identified for treatment include appliances, devices, fixtures (such as sinks, toilets, mirrors, lights, drains, tubs, showers, *etc*.), flooring materials (such as carpets, tile, wood, linoleum, concrete, area rugs, *etc*.), countertops and other hard surfaces (such as Formica, granite, porcelain, glass, plastic, *etc*.), clothing (such as shirts, pants, dresses, undergarments, outer garments, shoes, socks, *etc*.), and body parts, such as hair, skin, teeth, fingernails, toenails, buttocks, *etc.*

It should also be understood that in some embodiments, the mobile computing device 102 may be configured to store image data of an article. Referring back to FIG. 11 as an example, the image of the sink may be stored such that after the user applies the recommended product, the user may direct the image capture device 102a to the treated sink. With the new image data, the mobile computing device 102 can determine and/or show the improvement. Additionally, the mobile computing device 102 can determine whether the treatment is successful and, if not, provide instructions for subsequent treatments, other products to treat the issue, *etc.*

FIG. 12 depicts a flowchart for providing data for utilizing an article, according to embodiments shown and described herein. As illustrated in block 1250, a real-time video image of an article can be received. As discussed above, the article may include an inanimate object, a human body part, a pet body part, *etc.* Additionally, at block 1252, the article can be identified from the real-time video image. At block 1254, an action to be performed on the article can be determined. As also discussed above, the action may include a treatment option and/or a use option. At block 1256, data for performing the action can be provided via an altered version of the real-time video image. Additionally, product information and product purchasing options may also be provided.

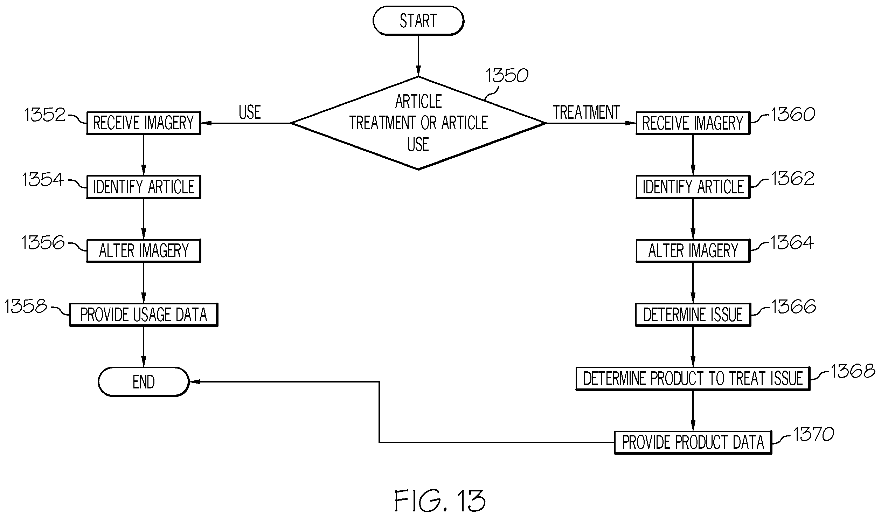

FIG. 13 depicts a flowchart for use and treatment of an article, according to embodiments shown and described herein. As illustrated in block 1350, a determination can be made regarding whether the user desires data regarding article treatment or article use. In response to a determination that article use is desired, at block 1352 a real-time video image that includes at least one article may be received. At block 1354, the at least one article may be identified from the real-time video image. At block 1356, the real-time video image is altered to highlight the identified at least one article. At block 1358, usage data for the at least one article may be provided as part of the altered real-time video image. Additionally, product information and product purchasing options may also be provided.

Additionally, returning to block 1350, if a determination is made that article treatment is desired, at block 1360 a real-time video image that includes at least one article may be received. At block 1362, the at least one article can be identified from the real-time video image. At block 1364, the real-time video image is altered to highlight the at least one article. At block 1366 at least one issue with the at least one article may be determined. At block 1368 a product for treating the issue may be determined. At block 1370 data related to the product may be provided via the altered real-time video image. Additionally, product information and product purchasing options may also be provided.

## Claims

1. A mobile computing device (102) for utilization of an article, comprising:
a first image capture device (102a) that captures a first real-time video image of the article; a memory component (240) that stores a first computer application, the first computer application causing the mobile computing device (102) to perform at least the following:
identify the article from the first real-time video image;
identify an action to be performed on the article including determining whether the action includes treating the article; and
alter the first real-time video image to create an altered first real-time video image; and
a display device for displaying the altered first real-time video image
wherein altering the first real-time video image includes highlighting the article in the altered first real-time video image and providing a predicted image of the article if treatment is performed;
wherein the first computer application further causes the mobile computing device to recommend a product for treating the article; and wherein the mobile computing device is configured to determine past selections to make product recommendations.

2. The mobile computing device (102) of claim 1, wherein altering the first real-time video image includes at least one of the following: providing instructions for treating the article, and providing an option to order a product for performing the action.

3. The mobile computing device of claim 1, wherein the memory component (240) stores a second computer application that facilitates storage of user data, the user data including information regarding at least one of the following: a physical condition of a user and an emotional condition of the user, wherein the second computer application provides the user data when executed in conjunction with the first computer application.

4. A non-transitory computer-readable medium for utilization of an article that stores a computer application that, when executed by a computer, causes the computer to perform at least the following:
identify the article from a first real-time video image;
identify an action to be performed on the article including determining whether the action includes treating the article;
alter the first real-time video image to create an altered image; and
provide the altered image for display, wherein providing the altered image includes providing data for performing the action;
wherein altering the first real-time video image includes highlighting the article in the altered first real-time video image and providing a predicted image of the article if treatment is performed;
wherein providing data for performing the action includes recommending a product for treating the article; and determining past selections to make product recommendations.

5. The non-transitory computer-readable medium of claim 4, wherein altering the first real-time video image includes at least one of the following: providing instructions for treating the article, and providing an option to order a product for performing the action.

## Patentansprüche

1. Mobile Rechenvorrichtung (102) zum Verwenden eines Gegenstands, umfassend:
eine erste Bilderfassungsvorrichtung (102a), die ein erstes Echtzeit-Videobild des Gegenstands erfasst; eine Speicherkomponente (240), die eine erste Computeranwendung speichert, wobei die erste Computeranwendung bewirkt, dass die mobile Rechenvorrichtung (102) mindestens das Folgende durchführt:
Identifizieren des Gegenstands in dem ersten Echtzeit-Videobild;
Identifizieren einer Aktion, die an dem Gegenstand durchzuführen ist, einschließlich des Bestimmens, ob die Aktion das Behandeln des Gegenstands einschließt; und
Verändern des ersten Echtzeit-Videobildes, um ein verändertes erstes Echtzeit-Videobild zu erzeugen; und
eine Anzeigevorrichtung zum Anzeigen des veränderten ersten Echtzeit-Videobildes,
wobei das Verändern des ersten Echtzeit-Videobildes das Hervorheben des Gegenstands in dem veränderten ersten Echtzeit-Videobild und das Bereitstellen eines vorhergesagten Bildes des Gegenstands einschließt, wenn eine Behandlung durchgeführt wird;
wobei die erste Computeranwendung ferner bewirkt, dass die mobile Rechenvorrichtung ein Produkt zum Behandeln des Gegenstands empfiehlt; und wobei die mobile Rechenvorrichtung dazu konfiguriert ist, vergangene Auswahlen zu bestimmen, um Produktempfehlungen abzugeben.

2. Mobile Rechenvorrichtung (102) nach Anspruch 1, wobei das Verändern des ersten Echtzeit-Videobildes wenigstens eines der Folgenden einschließt: Bereitstellen von Anweisungen zum Behandeln des Gegenstands und Bereitstellen einer Option zum Bestellen eines Produkts zum Durchführen der Aktion.

3. Mobile Rechenvorrichtung nach Anspruch 1, wobei die Speicherkomponente (240) eine zweite Computeranwendung speichert, die die Speicherung von Benutzerdaten erleichtert, wobei die Benutzerdaten Informationen bezüglich wenigstens eines der Folgenden einschließen: einen physischen Zustand eines Benutzers und einen emotionalen Zustand des Benutzers, wobei die zweite Computeranwendung die Benutzerdaten bereitstellt, wenn sie in Verbindung mit der ersten Computeranwendung ausgeführt wird.

4. Nicht-flüchtiges, computerlesbares Medium zum Verwenden eines Gegenstands, der eine Computeranwendung speichert, die, wenn sie von einem Computer ausgeführt wird, bewirkt, dass der Computer mindestens das Folgende durchführt:
Identifizieren des Gegenstands in einem ersten Echtzeit-Videobild;
Identifizieren einer Aktion, die an dem Gegenstand auszuführen ist, einschließlich des Bestimmens, ob die Aktion das Behandeln des Gegenstands einschließt;
Verändern des ersten Echtzeit-Videobildes, um ein verändertes Bild zu erzeugen; und
Bereitstellen des veränderten Bildes zur Anzeige, wobei das Bereitstellen des veränderten Bildes das Bereitstellen von Daten zum Durchführen der Aktion einschließt;
wobei das Verändern des ersten Echtzeit-Videobildes das Hervorheben des Gegenstands in dem veränderten ersten Echtzeit-Videobild und das Bereitstellen eines vorhergesagten Bildes des Gegenstands einschließt, wenn eine Behandlung durchgeführt wird;
wobei das Bereitstellen von Daten zum Durchführen der Aktion das Empfehlen eines Produkts zum Behandeln des Gegenstands und das Bestimmen vergangener Auswahlen zum Abgeben von Produktempfehlungen einschließt.

5. Nicht-flüchtiges, computerlesbares Medium nach Anspruch 4, wobei das Verändern des ersten Echtzeit-Videobildes mindestens eines der Folgenden einschließt: Bereitstellen von Anweisungen zum Behandeln des Gegenstands und Bereitstellen einer Option zum Bestellen eines Produkts zum Durchführen der Aktion.

## Revendications

1. Dispositif informatique mobile (102) pour l'utilisation d'un article, comprenant :
un premier dispositif de capture d'image (102a) qui capture une première image vidéo en temps réel de l'article ; un composant de mémoire (240) qui stocke une première application informatique, la première application informatique amenant le dispositif informatique mobile (102) à exécuter au moins ce qui suit :
identifier l'article à partir de la première image vidéo en temps réel ;
identifier une action à exécuter sur l'article, y compris le fait de déterminer si l'action inclut un traitement de l'article ; et
modifier la première image vidéo en temps réel pour créer une première image vidéo en temps réel modifiée ; et
un dispositif d'affichage pour afficher la première image vidéo en temps réel modifiée
dans lequel la modification de la première image vidéo en temps réel inclut la mise en évidence de l'article dans la première image vidéo en temps réel modifiée et la fourniture d'une image prédite de l'article si un traitement est effectué ;
dans lequel la première application informatique amène en outre le dispositif informatique mobile à recommander un produit pour traiter l'article ; et dans lequel le dispositif informatique mobile est configuré pour déterminer des sélections passées pour faire les recommandations de produit.

2. Dispositif informatique mobile (102) selon la revendication 1, dans lequel la modification de la première image vidéo en temps réel inclut au moins un des éléments suivants : fourniture d'instructions pour traiter l'article et fourniture d'une option pour commander un produit pour l'exécution de l'action.

3. Dispositif informatique mobile selon la revendication 1, dans lequel le composant de mémoire (240) stocke une deuxième application informatique qui facilite le stockage de données utilisateur, les données utilisateur incluant des informations concernant au moins un des éléments suivants : un état physique d'un utilisateur et un état émotionnel de l'utilisateur, dans lequel la deuxième application informatique fournit les données utilisateur lorsqu'elle est exécutée conjointement avec la première application informatique.

4. Support non transitoire lisible par ordinateur pour l'utilisation d'un article qui stocke une application informatique qui, lorsqu'elle est exécutée par un ordinateur, amène l'ordinateur à effectuer au moins ce qui suit :
identifier l'article à partir d'une première image vidéo en temps réel ;
identifier une action à exécuter sur l'article, y compris le fait de déterminer si l'action inclut un traitement de l'article ;
modifier la première image vidéo en temps réel pour créer une première image modifiée ; et
fournir l'image modifiée pour affichage, dans lequel la fourniture de l'image modifiée inclut la fourniture de données pour effectuer l'action ;
dans lequel la modification de la première image vidéo en temps réel inclut la mise en évidence de l'article dans la première image vidéo en temps réel modifiée et la fourniture d'une image prédite de l'article si un traitement est effectué ;
dans lequel la fourniture de données pour effectuer l'action inclut la recommandation d'un produit pour traiter l'article ; et la détermination de sélections passées pour faire des recommandations de produit.

5. Support non transitoire lisible par ordinateur selon la revendication 4, dans lequel la modification de la première image vidéo en temps réel inclut au moins un des éléments suivants : fourniture d'instructions pour traiter l'article et fourniture d'une option pour commander un produit pour l'exécution de l'action.
